Europäisches Patentamt

(19) European Patent Office

Office européen des brevets

(11) Veröffentlichungsnummer: **0 079 457**

**A1**

(12) **EUROPÄISCHE PATENTANMELDUNG**

(21) Anmeldenummer: **82109218.6**

(22) Anmeldetag: **06.10.82**

(51) Int. Cl.³: **F 16 L 21/06**
**F 16 L 55/16**

(30) Priorität: **05.11.81 CH 7076/81**

(43) Veröffentlichungstag der Anmeldung:
**25.05.83 Patentblatt 83/21**

(84) Benannte Vertragsstaaten:
**AT BE DE FR GB NL**

(71) Anmelder: **Straub, Immanuel**

**CH-7323 Wangs(CH)**

(72) Erfinder: **Straub, Immanuel**

**CH-7323 Wangs(CH)**

(74) Vertreter: **Patentanwälte Schaad, Balass, Sandmeier, Alder**
**Dufourstrasse 101 Postfach**
**CH-8034 Zürich(CH)**

(54) **Rohrkupplung sowie Verwendung derselben.**

(57) Ein in seinem Umfang verkleinerbares Gehäuse (11) besteht aus einem schellenförmigen Teil (13) dessen Enden (13',13") mit Spannschrauben (20) lösbar miteinander verbunden sind und aus einer von innen an die genannten Enden (13',13") anliegenden Ueberbrückungseinlage (23). Das schellenförmige Teil (13) ist stirnseitig mit nach innen gerichteten Ringflanschen (22) versehen. Das Gehäuse (11) umschliesst eine im axialen Querschnitt C-förmige nach innen offene Dichtmanschette (12) aus einem Elastomer, deren aus Dichtlippen ausgebildete Enden über eine ringförmige Abstützung am Manschettensteg abgestützt sind. Bei ungespannten Spannschrauben (20) ist der lichte Innendurchmesser der Dichtmanschette (12) grösser als der auf das Rohr (30) bezogene Nenndurchmesser der Kupplung. Um ein Aufsetzen der Kupplung auf ein Rohr (30) bzw. auf einen Stoss zwischen den Enden zweier fluchtender Rohre auch aus radialer Richtung zu ermöglichen, weist die Dichtmanschette (12) einen in axialer Richtung verlaufenden Trennschnitt (31) auf, und das schellenartige Teil (13) weist zwei je an ein Ende (13', 13") anschliessende Abschnitte auf, die in dem den Enden (13',13") gegenüberliegenden Bereich scharnierartig miteinander verbunden sind, um bei gelösten Spannschrauben ein Aufweiten des Gehäuses (11) bis über dem Nenndurchmesser zu ermöglichen.

Fig.2

## Rohrkupplung sowie Verwendung derselben

Die Erfindung betrifft eine Rohrkupplung der im Oberbegriff des Patentanspruches 1 genannten Art.

Eine solche Rohrkupplung ist beispielsweise aus der DE-OS 24 28 101.4 bekannt. Diese bekannte Rohrkupplung hat sich in der Praxis sehr gut bewährt. Das besondere Konzept dieser bekannten Kupplung besteht darin, dass die bei noch nicht angezogenen Spannschrauben einen grösseren lichten Innendurchmesser als der Aussendurchmesser des Rohres bzw. der zu verbindenden Rohrenden aufweisende Dichtungsmanschette beim Anziehen der Spannschrauben in Umfangsrichtung (und damit auch radial nach innen) gestaucht wird, wodurch das Material der Manschette und insbesondere deren Dichtlippen, dem einzigen Freiheitsgrad folgend, nach innen ausweicht und zur dichtenden Auflage auch auf rauhe Rohraussenflächen verpresst wird. Dabei ist in keinem Teil der Dichtungsmanschette deren Material auf Zug, d.h. auf Dehnung beansprucht, so dass auch bei Erlahmen der elastischen Eigenschaften des Elastomers, beispielsweise wegen Alterung und/oder thermischer Wechselbeanspruchung eine einwandfreie Abdichtung gewährleistet bleibt.

Die bekannte Kupplung lässt sich aber nur durch axiales Aufschieben auf das Rohr bzw. auf die zu verbindenen Rohrenden montieren. Dies setzt wiederum voraus, dass eines der Rohrenden axial zugänglich sein muss, d.h. dass dieses Rohrende in bezug auf das andere, anzukuppelnde Rohrende sich entweder axial oder aber seitlich verschieben und dann - nach Aufschieben der Kupplung - wieder in Ausgangslage zurückbringen lassen muss. Dies ist namentlich bei vielen, bestehenden Rohrleitungen nicht ohne weiteres möglich, so dass die bekannte Kupplung, z.B. beim Ausfall einer Rohrverbindung bei im übrigen noch intakten Rohren einer bestehenden Rohrleitung - wenn überhaupt - nur nach mühseligen Zusatzarbeiten eingesetzt werden kann.

Es ist daher ein Zweck der Erfindung, eine Kupplung der eingangs genannten Art zu schaffen, die bei Beibehaltung des bewährten Konzeptes (Stauchen der Dichtmanschette in Umfangsrichtung) auch von der Seite, z.B. auf den Stoss zwischen den Enden zweier fluchtender Rohre aufgesetzt werden kann.

Zu diesem Zweck weist die vorgeschlagene Kupplung die im Kennzeichen des Anspruches 1 angegebenen Merkmale auf.

Das Aussergewöhnliche an der vorgeschlagenen Kupplung liegt unter anderen Dingen darin, dass die Dichtungsmanschette einen Trennschnitt in axialer Richtung aufweist. Dieser erlaubt einerseits das Aufsetzen aus radialer Richtung. Andererseits könnte nach fachmännischer Vorstellung durch diesen Trennschnitt aber das Dichtvermögen der Dichtmanschette in Frage gestellt sein, doch werden bei der vorgeschlagenen Kupplung - beim Anziehen der Spannschrauben - die an den Trennschnitt angrenzenden Schnittflächen der Dichtmanschette wegen des bereits beschriebenen Stauchens derselben im Umfangssinne, so stark aneinander gepresst, dass überraschenderweise das Dichtvermögen ebenso einwandfrei gewährleistet bleibt, als wäre die Dichtmanschette in ihrem Umfang in sich geschlossen.

Merkmale besonders bevorzugter Ausführungsformen der vorgeschlagenen Kupplung sind den abhängigen Patentansprüchen zu entnehmen.

Die Erfindung ist nachstehend rein beispielsweise anhand der Zeichnung näher beschrieben. Es zeigt:

Fig. 1     eine Stirnansicht einer Ausführungsform in aufgeweitetem Zustand,

Fig. 2     eine Stirnansicht der Kupplung gemäss Fig. 1, auf ein Rohr bzw. einen Rohrstoss aufgesetzt, mit eingesetzten, jedoch nicht angezogenen Spannschrauben,

Fig. 3     einen Schnitt etwa längs der Linie III-III der Fig. 2 oder 6 bei noch nicht angezogenen Spannschrauben,

Fig. 4     einen Schnitt ähnlich wie Fig. 3, jedoch mit angezogenen Spannschrauben,

Fig. 5     in perspektivischer Darstellung ein Detail des einen an den Trennschnitt angrenzenden Endbereichs der Dichtmanschette, und

Fig. 6     eine Stirnansicht einer weiteren Ausführungsform.

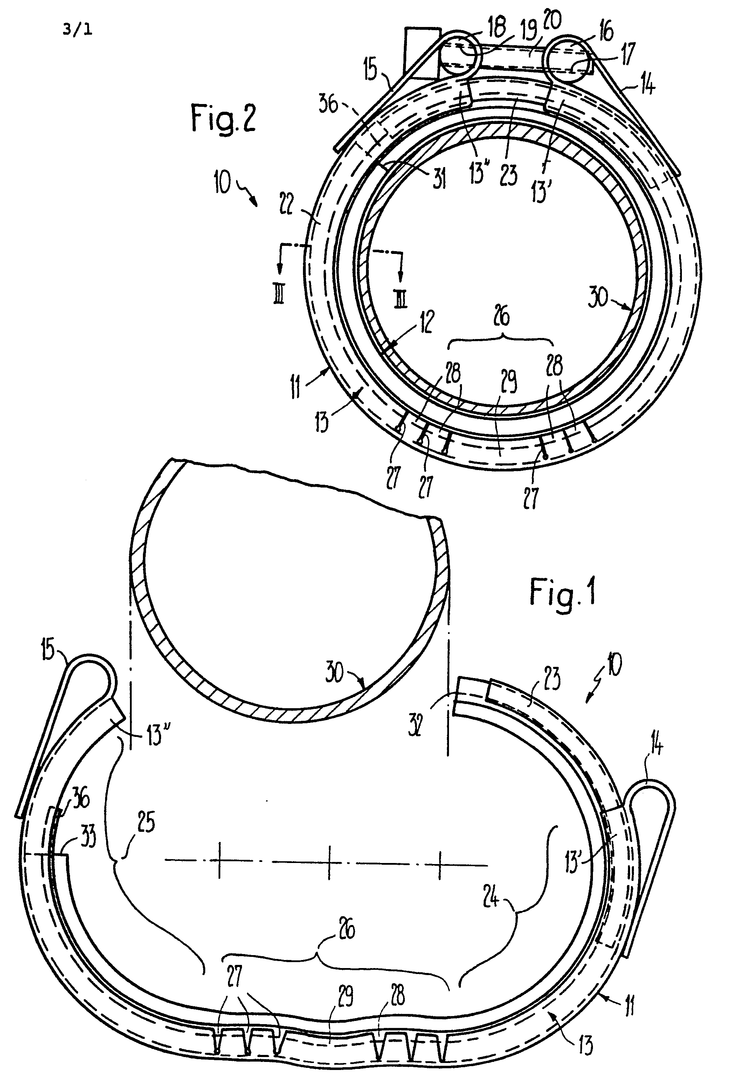

Vorerst wird auf die Fig. 1 - 5 Bezug genommen, die keinerlei Anspruch auf exakte Massstäblichkeit erheben.

Die dargestellte Kupplung 10 besitzt ein Gehäuse 11, das eine Dichtungsmanschette 12 aus einem Elastomer umschliesst. Das Gehäuse 11 besteht aus einem schellenförmigen Teil 13, an dessen Enden 13', 13" nach aussen umgebogene und mit der äusseren Mantelfläche des Teiles 13 verschweisste Lappen 14,15 vorhanden sind. Der Lappen 14 umschliesst einen Scharnierzapfen 16, der mit mehreren, beispielsweise zwei, parallelachsigen und quer verlaufenden Gewindebohrungen 17 versehen ist. Der Lappen 15 umschliesst ebenfalls einen Scharnierzapfen 18, der mit glatten Querbohrungen 19 versehen ist, wobei ebensoviele Querbohrungen 19 als Gewindebohrungen 17 und in gleichen Abständen vorhanden sind. Durch nicht dargestellte Ausnehmungen im Lappen 15, durch die Querbohrungen 19 und durch nicht dargestellte Ausnehmungen im Lappen 14 erstrecken sich in die Gewindebohrungen 17 eingeschraubte Spannbolzen 20.

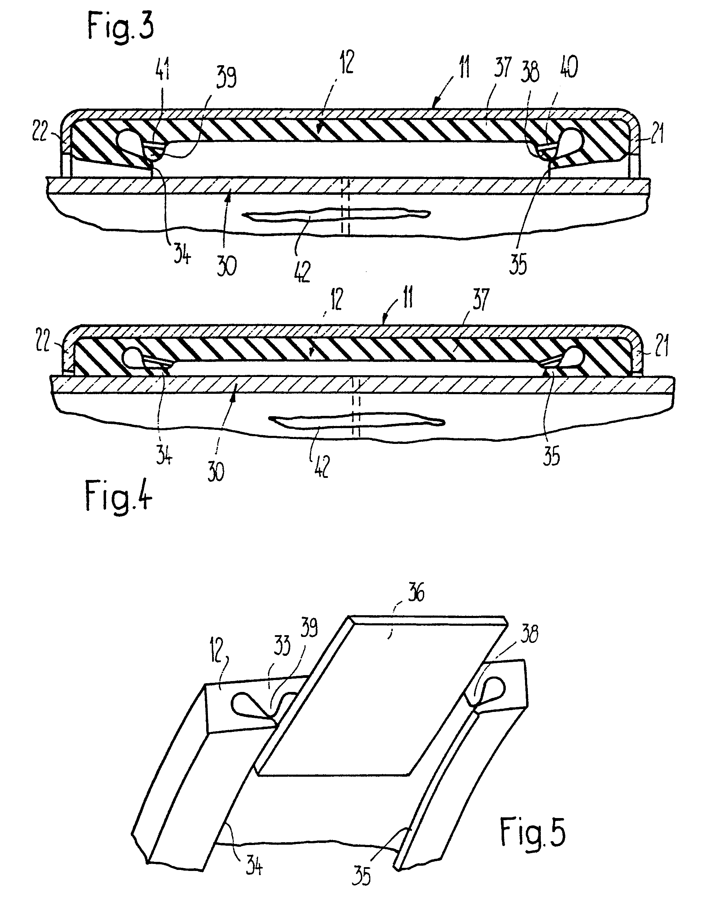

Wie insbesondere den Fig. 3 und 4 zu entnehmen ist, weist der schellenförmige Teil 13 an beiden Stirnseiten nach innen gerichtete Ringflansche 21,22 auf, so dass das schellenförmige Teil ein Axialprofil etwa in der Form eines langestreckten, nach innen offenen C besitzt.

Das Gehäuse 11 besteht ferner aus einem (in montiertem Zustand) innen an den Enden 13', 13" anliegenden, mit dem schellenförmigen Teil etwa profilgleiches Ueberbrückungsteil 23, das, wie aus der Fig. 1 ersichtlich, an der Innenseite des Endes 13' beispielsweise durch Punktverschweissung befestigt ist. Das Gehäuse 11, d.h. das schellenförmige Teil 13 und das Ueberbrückungsteil 23 besteht vorzugsweise aus rostfestem Stahl.

Aus Fig. 1 geht besonders deutlich hervor, dass das bei dieser Ausführungsform einstückig ausgebildete, schellenförmige Teil 13 im Prinzip drei Abschnitte aufweist, nämlich die an die Enden 13', 13" anschliessenden, verhältnismässig biegesteifen (wegen den Ringflanschen 21,22) Abschnitte 24,25,die in ihrem,den Enden 13', 13" gegenüberliegenden Bereich durch einen Mittelabschnitt 26 miteinander verbunden sind. Im Mittelabschnitt 26 sind die stirnseitigen Ringflansche durch mehrere radial verlaufende Schlitze 27 in Segmente 28, 29 aufgetrennt, wobei das den Enden 13', 13" diametral gegenüberliegende Segment 29 in Umfangsrichtung bedeutend länger ist, als die in Umfangsrichtung dem Segment 29 benachbarten Segmente 28. Daraus ergibt sich, dass der Abschnitt 26 um zur Achse der Kupplung parallele Biegeachsen biegsam ist und gewissermassen die Funktion eines Scharniers ausübt, so dass sich das schellenförmige Teil ohne weiteres so weit aufweiten lässt, dass das schellenförmige Teil 13 sich aus radialer Richtung über ein Rohr 30 bzw. über den Stoss zwischen den Enden zweier fluchtender Rohre aufsetzen lässt.

Damit dies auch für die Dichtmanschette 12 möglich ist, weist diese einen axialen Trennschnitt 31 (Fig. 2) auf, der, in montiertem Zustand, in Umfangsrichtung bezüglich des Ueberbrückungsteiles 23 versetzt ist. In der Tat steht, wie deutlich aus Fig. 1 ersichtlich ist, die eine an den Trennschnitt 31 angrenzende Schnittfläche 32 der Manschette 12 über das freie, vom Ende 13' abstehende Ende des Ueberbrückungsteiles 23 hervor. Die andere, an den Trennschnitt 31 angrenzende Schnittfläche 33 der Dichtmanschette 12 ist dementsprechend in Umfangsrichtung gegenüber dem Ende 13"
zurückversetzt angeordnet und dort an der Innenseite des
Gehäuses 11, z.B. durch Verklebung befestigt ist.

Um zu gewährleisten, dass beim Schliessen der Kupplung,
d.h. beim Ueberführen derselben aus dem in Fig. 1 dargestellten, aufgeweiteten Zustand in den in Fig. 2 dargestellten Zustand die beiden Schnittflächen 32 und 33 möglichst deckungsgleich aufeinander zu liegen kommen, ist,
wie aus Fig. 5 deutlich hervorgeht, an der Innenseite der
Dichtmanschette 12 zwischen deren Dichtlippen 34 und 35
ein Führungslappen 36, vorzugsweise aus dem gleichen Material wie die Dichtmanschette 12 selbst angeklebt.

Das axiale Querschnittsprofil der Dichtmanschette ist
deutlich aus Fig. 3 und 4 (betriebsbereite Kupplung) zu
ersehen. Die Manschette 12 besitzt einen Steg 37, an dessen Stirnseiten die bereits erwähnten, gegeneinander gerichteten Dichtlippen 34, 35 geformt sind. Auf der Höhe
beider Dichtlippen 34, 35 ist am Steg 37 je ein ringförmiger, nach innen weisender Wulst 38, 39 angeformt, auf den
sich die Dichtlippen 35, 34 aussen abstützen. Die Wülste
38, 39 sind auch mit im wesentlichen axial verlaufenden
Durchlässen 40, 41 versehen. Anstelle der angeformten
Wülste 38, 39 können auch aufgetrennte Schraubenfederringe
vorgesehen sein (nicht dargestellt), um die Dichtlippen
35, 34 gegen den Steg 37 abzustützen.

Wenn nun die in Fig. 1 in aufgeweitetem Zustand dargestellte Kupplung um das Rohr 30, bzw. um den Stoss zwischen
zwei fluchtenden Rohren gelegt und der biegsame Abschnitt
zurückgebogen wird, kommen die Schnittflächen 32, 33 der
Manschette, geführt durch den Führungslappen 36, praktisch
deckungsgleich aufeinander zu liegen. Nach Einsetzen der
Scharnierzapfen 16, 18 werden die Spannbolzen 20 eingeschraubt. Die Kupplung hat nun die in Fig. 2 dargestellte Gestalt. Zieht man nun die Spannbolzen 20 an, so verringert sich der Gesamtumfang und damit auch der Durchmesser des Gehäuses 11. Die Dichtungsmanschette 12 wird dabei im Umfangssinne gestaucht und, da sie nur nach innen ausweichen kann, wird sie, wie in Fig. 4 dargestellt, mit ihren Dichtlippen 34, 35 satt und dichtend an den Umfang des Rohres 30 gepresst.

Aus dem Gesagten ergibt sich, dass die beschriebene Kupplung auch bestens dazu geeignet ist, ein in einem Rohr vorhandenes Leck, z.B. einen Riss 42, einwandfrei abzudichten.

Wenn der zwischen Aussenfläche des Rohres 30 bzw. der Rohrenden und der Innenseite des Steges vorhandene Zwischenraum (bei festgespannter Kupplung gemäss Fig. 4) vom Druck des vom Rohr geführten Mediums beaufschlagt wird, so werden dadurch die Dichtlippen 34, 35 und die Schnittflächen 32, 33 zusätzlich an die Rohroberfläche bzw. aneinander angepresst. Dies deswegen, weil sich dieser Druck durch die Durchlässe 40, 41 in den Zwischenraum zwischen dem Wulst 38 bzw. 39 und der Wurzel der zugeordneten Dichtlippe 35 bzw. 34 fortpflanzt.

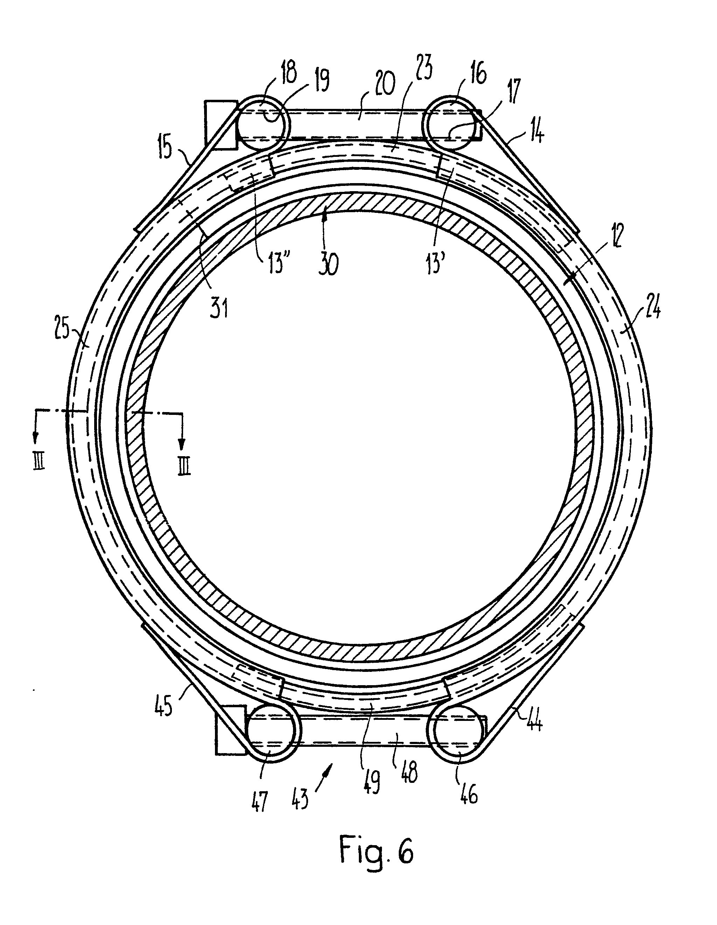

Die Ausführungsform der Fig. 6, die besonders für grosse Rohrdurchmesser geeignet ist, unterscheidet sich von der bisher beschriebenen Ausführungsform lediglich dadurch, dass die biegesteifen Abschnitte 24, 25 des schellenartigen Teiles 13 des Gehäuses 11 nicht durch einen biegsamen, angeformten Mittelabschnitt, sondern durch ein Doppelscharnier 43 miteinander verbunden sind. An den den Enden 13', 13" gegenüberliegenden Enden der Abschnitte 24, 25 sind nach aussen aufgebogene Lappen 44, 45 vorhanden, die je einen Scharnierzapfen 46, 47 umschliessen. Die Scharnierzapfen 46, 47 sind mittels Schraubbolzen 48 aneinandergekuppelt, ähnlich wie dies für die Scharnierzapfen 16, 18 beschrieben wurde.

Der Spalt zwischen den an das Doppelscharnier 43 angrenzenden Enden der Abschnitte 24, 25 ist durch ein an der Innenseite dieser beiden Enden anliegendes Ueberbrückungsteil 49, das mit dem Ueberbrückungsteil 23 vergleichbar ist, überbrückt. Die Scharnierzapfen 46, 47 können auch näher zueinander als in Fig. 6 dargestellt angeordnet sein.

Im Betrieb ist die Wirkungsweise der Ausführungsform der Fig. 6 dieselbe wie jene der Ausführungsform der Fig. 1. Bei der Montage der Ausführungsform der Fig. 6 wird indessen kein Teil des Gehäuses deformiert.

Selbstverständlich können die beschriebenen Kupplungen, die zunächst je im Zustand der Fig. 1 oder 6 vorliegen, auch axial auf ein Rohrende aufgeschoben werden und insofern ist die beschriebene Kupplung sozusagen universell, insbesondere auch als "Reparaturschelle" verwendbar.

## Patentansprüche

1. Rohrkupplung mit einem in seinem Umfang verkleinerbaren Gehäuse (11), bestehend aus einem schellenförmigen Teil (13), dessen Enden (13',13") mit Spannschrauben (20) lösbar miteinander verbunden sind und das stirnseitig mit nach innen gerichteten Ringflanschen (21,22) versehen ist, sowie aus einer von innen an den Enden (13', 13") des schellenförmigen Teiles (13) anliegenden, mit diesem profilgleichen Ueberbrückungseinlage (23), welches Gehäuse (11) eine im axialen Querschnitt C-förmige, nach innen offene Dichtmanschette (12) aus einem Elastomer umschliesst, deren als Dichtlippen (34,35) ausgebildete Enden über eine ringförmige Abstützung (38,39) am Manschettensteg (37) abgestützt sind, wobei bei ungespannten Spannschrauben (20) der Innendurchmesser der Dichtmanschette (12) grösser ist als der auf das Rohr (30) bezogene Nenndurchmesser der Kupplung, dadurch gekennzeichnet, dass die Dichtmanschette (12) einen in axialer Richtung verlaufenden Trennschnitt (31) aufweist, und dass der schellenartige Teil (13) zwei je an ein Ende (13',13") anschliessende Abschnitte (24,25) aufweist, die in dem den Enden (13',13") gegenüberliegenden Bereich scharnierartig miteinander verbunden

18.9.81
Sa:re

A 3976 CH

sind, um das Gehäuse, nach Lösen der Spannschrauben, durch Auseinanderbewegen der Enden bis über den Nenndurchmesser aufzuweiten.

2. Rohrkupplung nach Patentanspruch 1, dadurch gekennzeichnet, dass die an die Enden (13',13") des schellenförmigen Teils (13) anschliessenden Abschnitte (24,25) biegesteif sind und in dem den Enden (13',13") diametral gegenüberliegenden Bereich durch einen angeformten, um achsparallele Biegeachsen biegsamen Mittelabschnitt (26) miteinander verbunden sind.

3. Rohrkupplung nach Patentanspruch 1, dadurch gekennzeichnet, dass die an die Enden (13',13") des schellenförmigen Teiles (13) anschliessenden Abschnitte (24,25) biegesteif sind und in dem den Enden (13',13") gegenüberliegenden Bereich durch ein Scharnier (43) miteinander verbunden sind, wobei im Bereich des Scharnieres (43) eine weitere, profilgleiche Ueberbrückungseinlage (49) angeordnet ist.

4. Rohrkupplung nach Patentanspruch 2, dadurch gekennzeichnet, dass der biegsame Mittelabschnitt (26) ein zu den biegesteifen Abschnitten (24,25) identisches Längsprofil aufweist, wobei die am biegsamen Mittelabschnitt (26) vorhandenen, nach innen gerichteten Abschnitte der Ringflansche (21,22) durch radial verlaufende Schlitze (27) in Segmente (28,29) aufgeteilt sind.

5. Rohrkupplung nach Patentanspruch 4, dadurch gekennzeichnet, dass die Segmente der Ringflanschabschnitte des biegsamen Mittelabschnittes (26) ein den Enden (13',13") diametral gegenüberliegendes Segment (29) aufweisen, das in Umfangsrichtung länger ist als die in Umfangsrichtung anschliessenden Segmente (28).

6. Rohrkupplung nach Patentanspruch 1, dadurch gekennzeichnet, dass der Trennschnitt (31) der Dichtmanschette (12) bei geschlossenem Gehäuse (11) in Umfangsrichtung bezüglich der an dem einen Ende (13') des schellenförmigen Teiles (13) befestigten Ueberbrückungseinlage (23) versetzt angeordnet ist.

7. Rohrkupplung nach Patentanspruch 6, dadurch gekennzeichnet, dass bei aufgeweitetem Gehäuse (11) die eine an den Trennschnitt (31) angrenzende Schnittfläche (32) der Dichtmanschette (12) in Umfangsrichtung über das freie Ende der Ueberbrückungseinlage (23) vorsteht.

8. Rohrkupplung nach Patentanspruch 1, dadurch gekennzeichnet, dass der Trennschnitt (31) an der Innenseite des Steges (37) und zwischen den Dichtlippen (34,35) durch einen Führungslappen (36) aus einem Elastomer überbrückt ist, welcher an dem einen, an den Trennschnitt (31) angrenzenden Endbereich der Dichtmanschette (12) befestigt ist.

9. Rohrkupplung nach Patentanspruch 7, dadurch gekennzeichnet, dass die Dichtmanschette (12) im Bereich der anderen, an den Trennschnitt angrenzenden Schnittfläche (33) an der Innenseite des Gehäuses (11) befestigt ist, z.B. durch Verklebung.

10. Verwendung der Rohrkupplung nach einem der vorangehenden Patentansprüche zum Abdichten eines Leckes (42) in einem Rohr (30).

Fig.2

Fig.1

0079457

3/1

Fig.3

Fig.4

Fig.5

Fig. 6

Europäisches
Patentamt

**EUROPÄISCHER RECHERCHENBERICHT**

**0079457**
Nummer der Anmeldung

EP  82 10 9218

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | GB-A- 995 409 (CORNING GLASS WORKS)<br>* Seite 1, Zeilen 6-82; Figuren 2, 3 * | 1,2,4 | F 16 L 21/06<br>F 16 L 55/16 |
| A | US-A-2 403 449 (MEYER et al.)<br><br>* Figuren 2, 4 * | 1,2,4,6 | |
| A | US-A-2 893 097 (HILL et al.)<br>* Spalte 2, Zeilen 24-30; Figur 2 * | 1,2,4 | |
| A | US-A-2 897 569 (KASTNER)<br>* Spalte 1, Zeilen 49-52 * | 1,2 | |
| A | DE-U-6 932 291 (SCHLEMPER)<br><br>* Seite 1, Zeile 22 - Spalte 2, Zeile 2; Figuren 1, 2 * | 1,3,6,9 | RECHERCHIERTE SACHGEBIETE (Int. Cl. ³)<br><br>F 16 L 21/00<br>F 16 L 55/00<br>F 16 L 33/00 |
| A | US-A-2 417 741 (DILLON)<br>* Figur 1 * | 1,3 | |
| A | FR-A- 587 221 (SABDE)<br>* Figur 1 * | 1,3 | |
| D,A | DE-A-2 428 101 (STRAUB) | | |

Der vorliegende Recherchenbericht wurde für alle Patentansprüche erstellt.

| Recherchenort<br>**BERLIN** | Abschlußdatum der Recherche<br>**14-01-1983** | Prüfer<br>*SCHLABBACH M* |
|---|---|---|